Europäisches Patentamt

European Patent Office

Office européen des brevets

(11) Numéro de publication: **0 462 678 A1**

# DEMANDE DE BREVET EUROPEEN

(21) Numéro de dépôt: 91201555.9

(22) Date de dépôt: 19.06.91

(51) Int. Cl.5: **C04B 11/028**, F27B 9/14, B65G 35/00

(30) Priorité: 21.06.90 FR 9008135

(43) Date de publication de la demande:
27.12.91 Bulletin 91/52

(84) Etats contractants désignés:
AT BE CH DE DK ES FR GB GR IT LI LU NL SE

(71) Demandeur: **Dussel, Christian**
**Route de Barran**
**F-32000 Auch(FR)**

(72) Inventeur: **Dussel, Christian**
**Route de Barran**
**F-32000 Auch(FR)**

(74) Mandataire: **Barre, Philippe et al**
**Cabinet Barre-Gatti-Laforgue 95 rue des**
**Amidonniers**
**F-31069 Toulouse Cédex(FR)**

(54) **Installation pour le traitement d'une matière première pulvérulente telle que sulfate de calcium en vue de préparer un liant hydraulique.**

(57) L'invention concerne une installation pour le traitement d'une matière première se présentant sous forme pulvérulente telle que sulfate de calcium, en vue de préparer un liant hydraulique.

Cette installation comprend une enceinte en forme de cloche qui contient une pluralité de bacs horizontaux superposés (4). Chaque bac est équipé de rotors transversaux (5) qui sont disposés les uns au voisinage des autres de façon à couvrir toute la longueur du bac. Ces rotors, dotés de palettes périphériques, sont entraînés en rotation de façon à assurer une mise en suspension de la matière et un cheminement de celle-ci le long du bac. Dans les étages supérieurs, la matière ainsi mise en suspension est chauffée, par conduction et rayonnement, par des nappes de chauffage (11) qui s'étendent entre les bacs.

L'installation conforme à l'invention permet de réaliser un traitement thermique uniforme et contrôlé de la matière première pour obtenir un produit de caractéristique désirée.

Fig 3

L'invention concerne une installation pour le traitement d'une matière se présentant sous forme pulvérulente telle que sulfate de calcium naturel (gypse) ou de synthèse (sulfogypse, phosphogypse et autres sous-produits du même type), en vue de la transformer en un liant hydraulique de variété désirée (en particulier plâtres anhydrites de haute résistance).

Le sulfate de calcium est un matériau qui, par des traitements thermiques appropriés, permet de préparer des plâtres de plusieurs variétés, en particulier certains plâtres de haute résistance (notamment semi-hydrates ou anhydrites, de variété $\alpha$ ou autres) lesquels, une fois durcis, présentent des caractéristiques mécaniques beaucoup plus élevées que celles d'autres variétés (plâtre $\beta$).

Toutefois, les procédés de traitement de ce type de matériau pour obtenir la variété désirée sont de mise en oeuvre très délicate car le traitement doit être parfaitement homogène et contrôlé sous peine d'obtenir des matériaux ayant des caractéristiques très différentes de celles qui sont recherchées ; en particulier, chaque grain de matière première doit être soumis aux mêmes conditions précises de température et d'humidité.

Plusieurs procédés ont été conçus pour tenter d'opérer de tels traitements : brevets FR 2.572.721, FR 2.445.940, US 3.145.980, US 2.269.580. Dans ces procédés, la matière première est disposée en couches plus ou moins épaisses et tombe d'un plateau à un autre pour subir le traitement thermique sous atmosphère contrôlée. Toutefois, le sulfate de calcium est un mauvais conducteur de la chaleur et présente une forte tendance à coller et à s'agglomérer de sorte qu'un traitement uniforme est très difficile à obtenir par mise en oeuvre de ces procédés connus et que l'on a de grandes difficultés à préparer de façon rigoureusement reproductible un type de produit désiré.

Pour tenter de résoudre ces difficultés, on a proposé d'effectuer le traitement en lit fluidisé, le lit fluidisé de matière pulvérulente étant obtenu en soumettant celle-ci à un débit de gaz à travers un distributeur disposé à la base du lit (brevet FR 2.389.855). Toutefois, ce type de matière produit très rapidement un colmatage des distributeurs de sorte qu'elle s'avère très difficile à fluidiser par ces procédés de fluidisation connus ; de plus, ces procédés sont de mise en oeuvre très onéreuse, en raison des débits de gaz nécessaires, surtout lorsque la matière doit être traitée en plusieurs lits fluidisés superposés, comme c'est le cas dans le brevet français précité.

La présente invention se propose de résoudre les difficultés sus-évoquées et de fournir une installation de traitement de matière pulvérulente qui permette un traitement uniforme et contrôlé de la matière première, sans risque de colmatage ou d'agglomération des grains entre eux et à un coût modéré, très inférieur à celui des procédés travaillant en lit fluidisé traditionnel.

A cet effet, l'installation visée par l'invention comprend une enceinte en forme de cloche fermée sur les côtés et en partie haute, une pluralité de bacs superposés s'étendant dans ladite enceinte, chacun sensiblement horizontal, des moyens de distribution de matière première agencés en partie haute de l'enceinte pour délivrer la matière vers le bac supérieur, et des moyens d'évacuation de la matière traitée agencés en partie basse de l'enceinte pour recevoir ladite matière traitée en provenance du bac inférieur (par "bac sensiblement horizontal", on entend un bac ayant une inclinaison par rapport à l'horizontale inférieure à 15°) ; l'installation conforme à la présente invention se caractérise essentiellement en ce que :

- chaque bac comprend une pluralité de rotors transversaux s'étendant chacun sur la largeur du bac et disposés les uns au voisinage des autres de façon à couvrir toute la longueur du bac,
- des moyens d'entraînement sont associés auxdits rotors pour les entraîner en rotation de sorte que les rotors d'un bac tournent tous dans le même sens et que les rotors de deux bacs voisins tournent en sens inverse,
- chaque rotor est doté de palettes périphériques passant au cours de la rotation à proximité du fond du bac et à proximité des palettes des deux rotors voisins de façon à assurer une mise en suspension de la matière et un cheminement de celle-ci le long du bac dans le sens correspondant au sens de déplacement des palettes au point bas de la rotation,
- chaque bac comporte, d'une part, à une extrémité, des moyens de passage par gravité de la matière vers le bac voisin du dessous, d'autre part, à l'autre extrémité, une zone de réception de la matière provenant des moyens de passage du bac voisin du dessus, cette zone de réception étant située entre deux rotors de façon à assurer la mise en suspension de la matière à son arrivée dans le bac et son entraînement vers l'autre extrémité du bac,
- au moins dans les étages supérieurs, des moyens de chauffage sont disposés en nappes entre les bacs, chaque nappe s'étendant entre deux bacs sous le fond du bac du dessus et à l'aplomb du bac de dessous de façon à chauffer la matière contenue dans le bac du dessus par conduction et celle contenue dans le bac du dessous par rayonnement.

Ainsi, dans l'installation de l'invention, la matière première est mise en suspension dans chaque bac et le lit de matière présente sensiblement les propriétés d'un lit fluidisé, et en particulier celles d'assurer d'excellents échanges thermiques avec chaque grain de matière, d'assurer d'excellents transferts de matière (vapeur d'eau), d'autoriser une uniformité des conditions de traitement au coeur du lit et d'éviter les agglomérations des grains entre eux. On peut qualifier le lit de matière obtenu dans l'invention de "lit pseudo-fluidisé". Il est à souligner que ce lit qui chemine le long des bacs est obtenu mécaniquement en l'absence d'un fluide et de distributeurs, de sorte que l'installation de l'invention est exempte des défauts des installations connues travaillant en lit fluidisé.

Selon un mode de réalisation préféré, le fond de chaque bac est équipé, entre chaque paire de rotors voisins, d'une pièce intercalaire occupant la zone d'accumulation non balayée par les palettes : chaque pièce intercalaire est agencée de sorte que les palettes des deux rotors concernés passent à proximité de ladite pièce au cours de la rotation. On améliore ainsi la qualité du lit pseudo-fluidisé en supprimant les zones d'accumulation et les hétérogénéités de traitement qu'elles peuvent entraîner.

De préférence, les moyens d'entraînement des rotors sont adaptés pour permettre d'entraîner ceux-ci à une vitesse comprise entre 60 et 150 tours/minute et les rotors et leurs palettes sont agencés pour assurer une vitesse linéaire de cheminement de la matière comprise entre 1 et 2 m/minute. Les expérimentations ont démontré que de telles dispositions permettent en pratique d'obtenir un lit pseudo-fluidisé très homogène, et un traitement facile à contrôler, tout en mettant en oeuvre des puissances mécaniques modérées, compatibles avec un coût satisfaisant de l'installation et une consommation énergétique réduite (considérablement plus basse que celle exigée par les lits fluidisés connus).

Le nombre de bacs équipant l'installation peut différer selon l'application. Pour l'application au traitement du sulfate de calcium, ce nombre de bacs sera avantageusement compris entre 8 et 15, ces bacs étant métalliques pour transmettre par conduction la chaleur fournie par les nappes de chauffage. Ces nappes sont disposées entre les bacs situés dans la partie haute de l'enceinte de façon qu'une proportion de 60 % à 80 % des bacs soit chauffée. Dans cette application, les moyens de chauffage sont avantageusement adaptés pour permettre d'assurer au sein de la matière contenue dans les bacs supérieurs une température comprise entre 300° C et 500° C. Dans cette partie haute de l'enceinte, les grains du lit pseudo-fluidisé sont ainsi soumis à un apport calorifique (identique pour chaque grain) provenant de la conduction par les bacs (chauffage, par conduction, par la base de la couche pseudo-fluidisée) et du rayonnement par les nappes (chauffage par rayonnement par dessus la couche). Cet apport calorifique provoque une transformation des grains et un dégagement de vapeur d'eau (eau d'interposition et eau de cristallisation de la matière première) : le traitement s'opère ainsi en atmosphère de vapeur sèche dans de remarquables conditions d'uniformité.

En ajustant le débit de matière, la répartition de l'apport calorifique et les températures tout au long du traitement, l'installation suivant l'invention permet, à partir de matières premières d'origines variées, d'obtenir un produit bien défini, ou, à partir d'une même matière première, d'ajuster aux besoins, les caractéristiques du produit final obtenu.

Selon un premier mode de réalisation, les moyens de chauffage qui assurent l'apport calorifique comprennent un dispositif de chauffage d'un fluide caloporteur, des nappes de tubes fixées par des traverses métalliques au-dessous des fonds de bac, un collecteur d'entrée relié au dispositif de chauffage et à la nappe inférieure pour alimenter en parallèle en fluide caloporteur les tubes de ladite nappe inférieure, des moyens de distribution du fluide caloporteur d'une nappe vers la nappe de dessus, un collecteur de sortie relié aux tubes de la nappe supérieure, et, en partie haute, un dispositif de reprise du fluide caloporteur.

Dans ce type de réalisation, les générateurs sont notamment des brûleurs situés au pied de l'enceinte et l'énergie calorifique nécessaire au traitement de la matière est apportée par les gaz chauds ou fumées chaudes issus de ces brûleurs, le dispositif de reprise en partie haute étant constitué par une cheminée traversant la paroi supérieure de la cloche. La cheminée peut être équipée d'un échangeur permettant de récupérer, avant leur mise à l'atmosphère, une partie des calories contenues dans les fumées pour préchauffer de l'air qui peut soit alimenter les brûleurs en comburant, soit être injecté dans le collecteur le plus bas. Dans une variante, les fumées elles-mêmes peuvent être récupérées et réinjectées dans les collecteurs à un ou plusieurs niveaux judicieusement choisis. Il est en outre possible de diriger une partie de ces fumées vers les silos de stockage ou vers les transporteurs d'alimentation en matière première pour réaliser un préchauffage de cette matière première et diminuer son humidité lorsque celle-ci est excessive. Ces types de réalisation améliorent le rendement thermique de l'installation.

Selon un autre mode de réalisation, les moyens de chauffage comprennent des nappes de résistances électriques fixées au-dessous des fonds de bac, ainsi que des moyens d'alimentation électrique desdites nappes de résistances.

Par ailleurs, au cours de son traitement la matière première dégage, comme indiqué plus haut, de la vapeur d'eau ainsi que des gaz divers suivant sa provenance. Ces produits s'accumulent dans la cloche d'où ils sont extraits par un conduit d'exhaure traversant le plafond de la cloche et équipé d'un volet de réglage de la pression dans celle-ci. La vapeur et les gaz extraits peuvent être dirigés vers un bac d'eau additionnée éventuellement de réactifs où ils s'épurent et se refroidissent par barbotage, ce qui permet d'assurer une production d'eau chaude, et la concentration des produits nocifs pour leur envoi vers des unités de traitement spécialisées.

Il est à noter que l'installation de l'invention peut, le cas échéant, être disposée sur une remorque routière ou être équipée d'un train d'essieux autorisant son déplacement facile et rapide en vue soit de l'utilisation de sources de matière première dispersées, soit de la production du produit traité directement sur les lieux d'utilisation.

D'autres caractéristiques, buts et avantages de l'invention ressortiront de la description qui suit en référence aux dessins annexés qui en présentent, à titre d'exemple, un mode de réalisation ; sur ces dessins qui font partie intégrante de la présente description :

- la figure 1 est une coupe longitudinale de l'installation par un plan axial vertical,

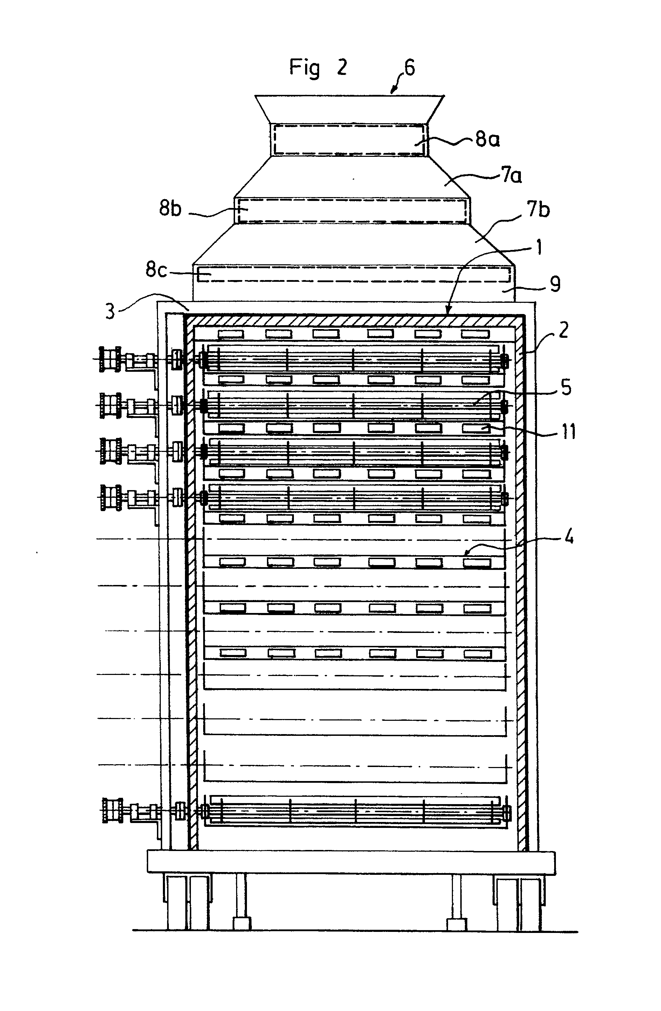

- la figure 2 en est une coupe transversale par un plan AA (dans un but de simplification, on n'a pas représenté tous les rotors aux figures 1 et 2),
- la figure 3 est une coupe de détail longitudinale montrant partiellement deux bacs superposés et leurs rotors,
- la figure 4 est une vue schématique en perspective montrant l'agencement des bacs, des rotors et des moyens de chauffage,
- la figure 5 est une vue schématique en perspective d'un rotor, et la figure 6 en est une coupe par un plan BB,
- la figure 7 est une vue schématique en perspective montrant l'entraînement des rotors d'un bac,
- enfin, la figure 8 est un schéma illustrant le fonctionnement de l'installation et la mise en suspension de la matière première pulvérulente pour constituer un lit pseudo-fluidisé L.

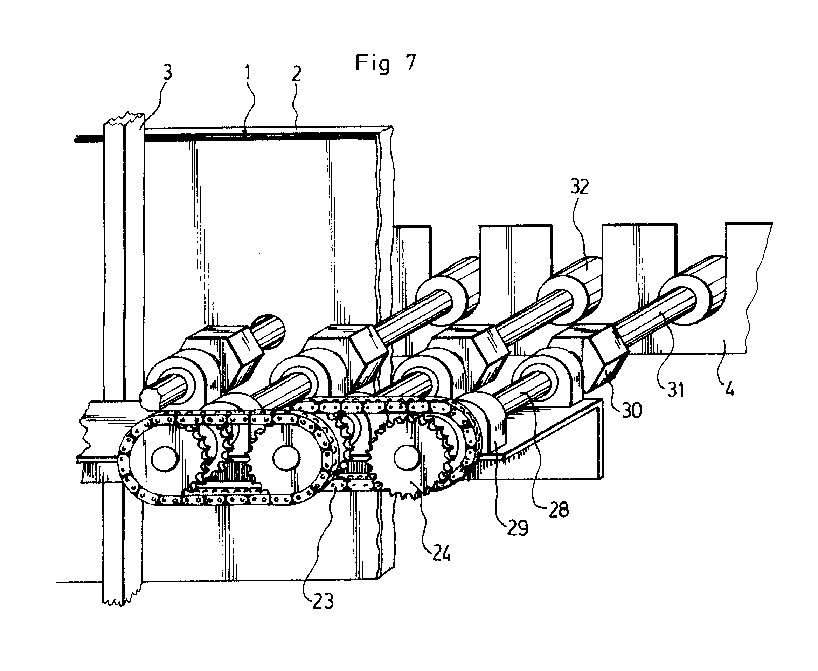

L'installation représentée à titre d'exemple aux figures peut en particulier être appliquée pour transformer en un liant hydraulique du gypse naturel ou de synthèse se présentant, avant traitement, sous forme pulvérulente (de l'impalpable à 5/10 mm), avec son humidité naturelle et à la température ambiante. Elle comporte une cloche parallélépipédique 1 composée de parois en tôle, garnies intérieurement d'éléments réfractaires isolants 2 et supportées par une ossature en profilés 3. Cette enceinte contient une série de bacs superposés horizontaux tels que 4, en forme de U à fond plat, en tôle d'acier réfractaire, à l'intérieur desquels tournent des rotors 5 commandés de l'extérieur de l'enceinte par un système d'entraînement par chaînes 23 et pignons 24 représentés à titre d'exemple à la figure 7.

L'installation comporte des moyens de distribution de matière première constitués par une trémie d'alimentation 6 située sur le plafond de la cloche, formant deux sas 7a, 7b entre trois distributeurs rotatifs 8a, 8b, 8c, la longueur des distributeurs allant en croissant et leur diamètre en décroissant du plus haut au plus bas, de manière à répartir l'alimentation sur toute la largeur des transporteurs, tout en assurant un débit constant par leur homocinétisme ; un conduit de distribution 9 à la base du distributeur inférieur 8c débouche, au travers de la cloche, sur une extrémité du bac supérieur. Après son cheminement de haut en bas dans les bacs successifs, la matière est déchargée dans une trémie réceptrice 10 qui alimente un dispositif d'évacuation vers des silos de stockage (non représenté).

En l'exemple, l'installation comporte onze bacs superposés, les huit bacs supérieurs étant dotés de moyens de chauffage.

L'apport calorifique est, dans l'exemple représenté, réalisé par la circulation de fumées chaudes circulant dans des nappes de tubes 11 disposées entre deux bacs voisins ; en l'exemple, ces tubes ont des sections rectangulaires et sont fixés à des traverses 33 soudées sous le fond des bacs. Les fumées peuvent être remplacées par tout fluide caloporteur approprié et les tubes peuvent être remplacés par des résistances électriques. Les tubes d'une nappe sont alimentés en parallèle par un collecteur 12 qui recueille les fumées sortant de la nappe située au-dessous pour la répartir vers la nappe du dessus. Seuls, le collecteur d'entrée 13 et le collecteur de sortie 14 ne sont reliés qu'à une nappe de tubes. Les bacs inférieurs (au nombre de trois en l'exemple) ne sont pas équipés de nappes de chauffage pour permettre à la matière de se stabiliser sans apport calorifique, puis de se refroidir jusqu'à des températures qui peuvent être de l'ordre de 120 à 150 ˚C.

Les tubes sont alimente's en gaz chauds par un ou plusieurs générateurs de fumées chaudes (en l'exemple brûleurs au nombre de deux : 15a, 15b) disposés sur un châssis à la partie inférieure de la cloche. Ces générateurs sont branchés à un ou plusieurs collecteurs suivant les besoins de la matière à traiter et la répartition de températures désirée.

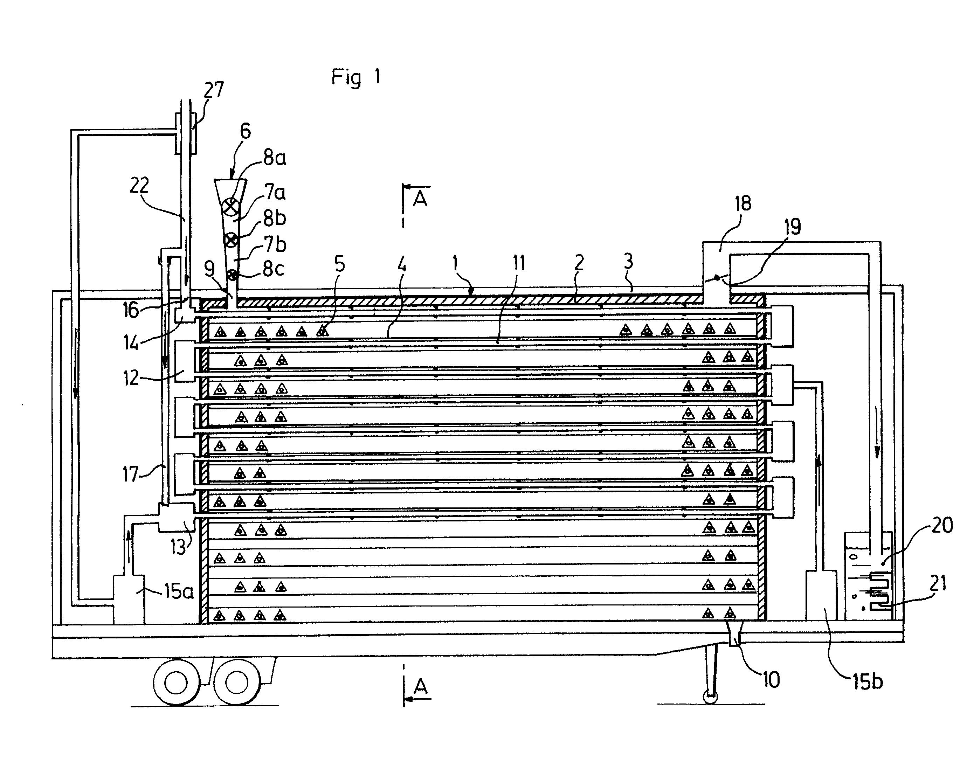

Le nombre de nappes de tubes 11, le nombre de bacs non équipes de tubes de chauffe, le nombre de générateurs de fumées chaudes, le nombre et la position des piquages d'arrivée des gaz chauds sur les collecteurs peuvent varier suivant les nécessités (la configuration de la figure 1 étant donnée uniquement à titre d'exemple non limitatif).

A la partie supérieure, les fumées rassemblées dans le collecteur 14 sont évacuées par une cheminée 22 équipée d'un papillon 16 permettant d'ajuster manuellement ou automatiquement la pression et la vitesse de circulation des gaz chauds dans les tubes. Cette cheminée peut être équipée d'un piquage 17 permettant de récupérer une partie des gaz chauds sortants pour la réinjecter en amont du dispositif de chauffage afin d'améliorer le rendement. A cette réinjection de fumées chaudes est ajouté un échangeur 27 servant, par refroidissement des fumées, à générer de l'air chaud utilisable pour l'alimentation des générateurs en air comburant ou pour l'alimentation directe du circuit de chauffage entre les générateurs et les nappes de tubes. En outre, une partie des fumées peut être envoyée dans les silos contenant la matière première et sur le transporteur assurant son acheminement vers l'installation pour assurer son préchauffage.

La cloche est équipée sur son plafond d'un conduit d'exhaure 18 traversant la paroi en tôle et son garnissage isolant 2 pour évacuer l'atmosphère de vapeur d'eau sèche et les gaz divers dégagés par la matière et s'accumulant dans le haut de la cloche. Ce conduit est équipé d'un volet de réglage 19 commandé manuellement ou automatiquement et permettant de régler la pression dans le haut de la cloche. Les gaz extraits sont dirigés vers une cuve 20 contenant de l'eau et des réactifs où, par barbotage, ils s'épurent et se refroidissent. Par concentration, on procède ainsi à l'épuration des gaz en produits nocifs et à l'évacuation ultérieure de ces derniers vers des centres de traitement spécialisés. En outre, un circuit noyé annexe 21 permet la production d'eau chaude.

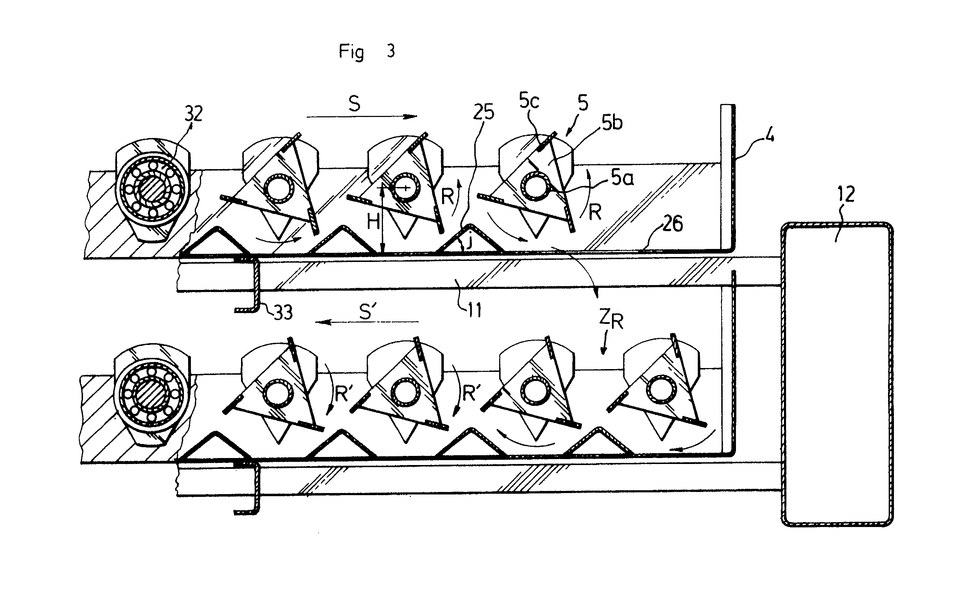

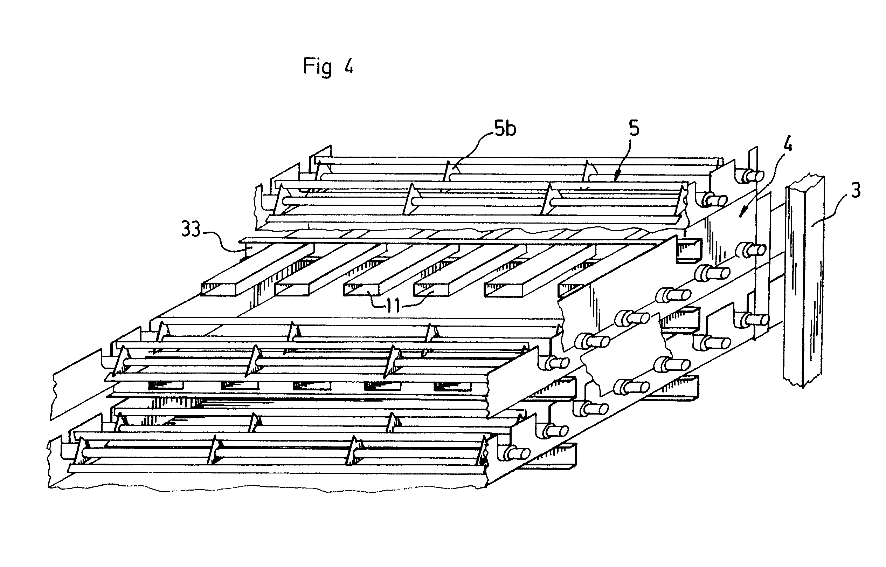

Par ailleurs, comme le représentent les figures 3 et 4, les rotors 5 s'étendent sur toute la largeur de chaque bac 4 et sont disposés les uns à proximité des autres, de façon à couvrir la longueur du bac. Entre chaque paire de rotors est fixée, sur le fond du bac, une pièce intercalaire 25 qui occupe la zone d'accumulation non balayée par les rotors.

Chaque rotor est constitué par un arbre tournant creux 5a, le long duquel sont répartis plusieurs supports 5b en l'exemple de forme triangulaire. Ces supports portent des palettes 5c, en l'exemple au nombre de trois disposées à 120°.

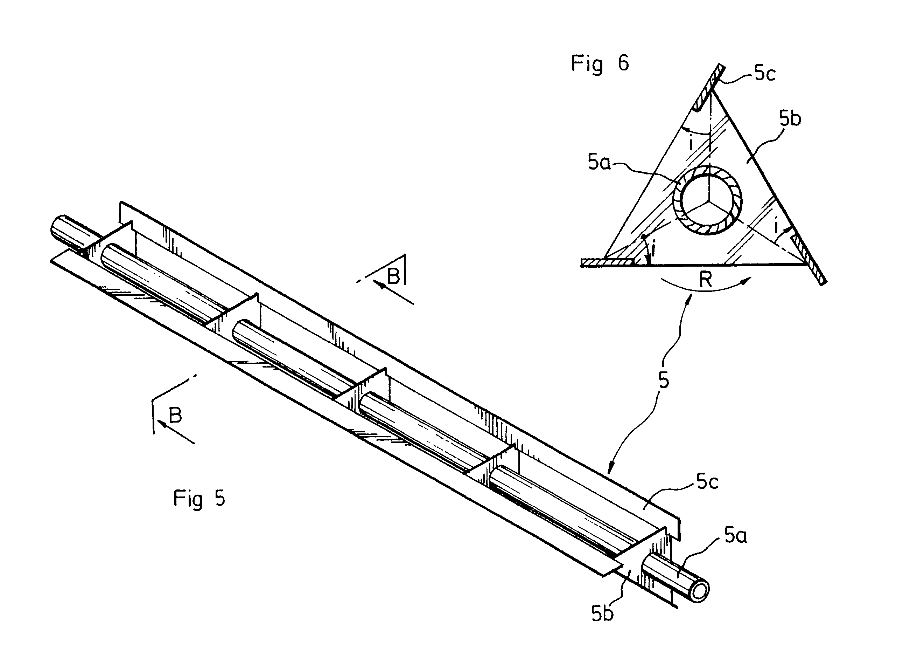

Comme le montre la figure 6, chaque palette est constituée par une lame sensiblement plane, inclinée par rapport à la direction radiale d'un angle -i- compris entre 20° et 40° (30° en l'exemple représenté). Chaque rotor est entraîné en rotation dans le même sens R que le sens d'inclinaison des palettes.

De plus, comme le montre la figure 3, chaque pièce intercalaire 25 présente la forme d'un V renversé dont les deux pans inclinés forment, avec le fond du bac, un angle -j- compris entre 30° et 50° (40° environ en l'exemple représenté). La hauteur de la pièce intercalaire au-dessus du fond est comprise entre 0,35 H et 0,5 H, où H est la distance séparant l'axe du rotor et le fond.

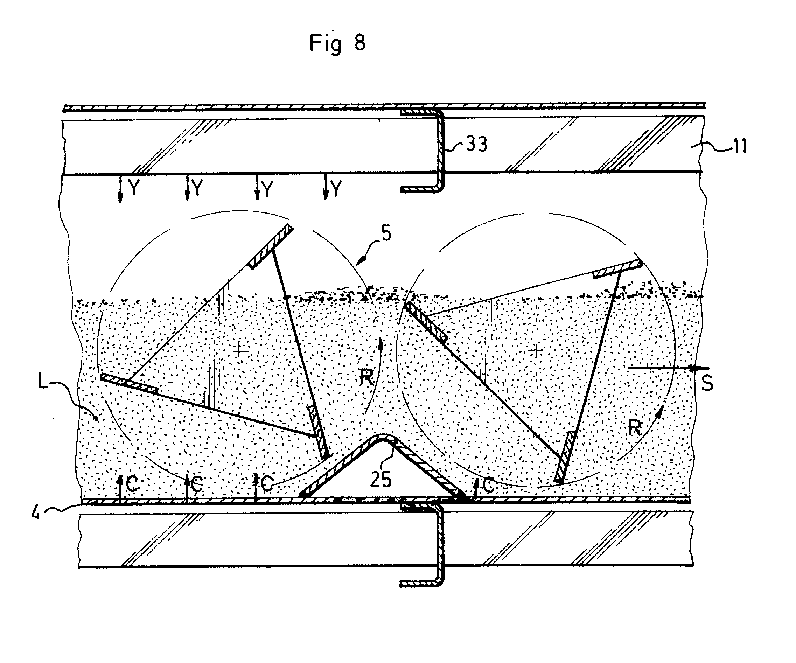

Les rotors de chaque bac sont entraînés pour tourner dans le même sens R, cependant que les rotors des bacs voisins sont entraînés pour tourner en sens inverse R'. Au cours de cette rotation, les palettes de chaque rotor passent à proximité du fond du bac et à proximité des pans inclinés des pièces intercalaires voisines, comme l'illustre la figure 8. Les organes d'entraînement sont adaptés pour autoriser une vitesse de rotation comprise entre 60 et 150 tours/minute (en particulier de l'ordre de 120 tours/minute). Au cours de cette rotation, la matière pulvérulente que contient chaque bac est mise en suspension pour former un lit équivalent à un lit fluidisé, dit lit pseudo-fluidisé L. Ce lit se déplace dans son ensemble dans le sens S (figure 8), du fait de la rotation des rotors, à une vitesse linéaire de cheminement comprise entre 1 et 2 m/minute (en particulier de l'ordre de 1,5 m/minute).

Chaque bac comporte à son extrémité aval (par rapport au sens de déplacement S) une fenêtre 26 de passage par gravité de la matière vers le bac du dessous (figure 3). Celui-ci comporte une zone ZR de réception de la matière, zone équipée de deux rotors de façon que ladite matière tombe entre ces rotors et soit immédiatement mise en suspension et entraînée en sens opposé S' (puisque les rotors de ce bac tournent en sens inverse). La matière chemine ainsi en lit pseudo-fluidisé vers l'autre extrémité de ce bac, où elle tombe sur le bac du dessous, et ainsi de suite jusqu'au bac inférieur de l'installation. Celle-ci permet donc de constituer des couches en suspension superposées, équivalentes à des lits fluidisés.

Ces couches sont chauffées, pour les huit bacs supérieurs, d'une part par rayonnement Y par les nappes de tubes 11 placées au-dessus de la couche, d'autre part par conduction C, par l'entremise du fond du bac qui reçoit la chaleur de la nappe placée au-dessous (figure 8). On réalise ainsi un traitement thermique homogène, remarquablement efficace de la couche pseudo-fluidisée, sans risque de colmatage ou d'agglomération des grains.

Les moyens d'entraînement des rotors sont de tout type connu. On a représenté à titre d'exemple à la figure 7 un mode de réalisation de ces moyens. Les arbres de rotor sont portés par des coussinets à roulement 32 au droit des flancs latéraux du bac. Ils sont reliés à l'extérieur de l'enceinte à un tronçon d'arbre 28 par un joint de cardan isolant 30. Ce tronçon d'arbre 28 porté par deux paliers 29 est entraîné par chaîne et pignon (23, 24), comme déjà évoqué. Tous les pignons correspondant aux rotors d'un même bac sont reliés par des chaînes assurant leur homocinétisme et leur rotation dans le même sens. Des moyens de renvoi entre un bac et les deux bacs voisins permettent d'obtenir des vitesses de rotation égales et des sens de rotation inverses des rotors de ces deux bacs voisins par rapport à ceux du bac considéré.

## Revendications

1. Installation pour le traitement d'une matière première se présentant sous forme pulvérulente telle que sulfate de calcium naturel ou de synthèse en vue de préparer un liant hydraulique, comprenant une enceinte (1) en forme de cloche fermée sur les côtés et en partie haute, une pluralité de bacs superposés (4) s'étendant dans ladite enceinte, chacun sensiblement horizontal, des moyens (6) de distribution de matière première agencés en partie haute de l'enceinte pour délivrer la matière vers le bac supérieur, des moyens (10) d'évacuation de la matière traitée agencés en partie basse de l'enceinte pour recevoir ladite matière traitée en provenance du bac inférieur, ladite installation étant caractérisée en ce que :
   - chaque bac (4) comprend une pluralité de rotors transversaux (5) s'étendant chacun sur la largeur du bac, et disposés les uns au voisinage des autres de façon à couvrir toute la longueur du bac,
   - des moyens (23, 24) d'entraînement sont associés auxdits rotors pour les entraîner en rotation de sorte que les rotors d'un bac tournent tous dans le même sens et que les rotors de deux bacs voisins tournent en sens inverse,
   - chaque rotor (5) est doté de palettes périphériques (5c) passant au cours de la rotation à proximité du fond du bac et à proximité des palettes des deux rotors voisins de façon à assurer une mise en suspension de la matière et un cheminement de celle-ci le long du bac dans le sens correspondant au sens de déplacement des palettes au point bas de la rotation,
   - chaque bac (4) comporte, d'une part, à une extrémité, des moyens (26) de passage par gravité de la matière vers le bac voisin du dessous, d'autre part, à l'autre extrémité, une zone (ZR) de réception de la matière provenant des moyens de passage du bac voisin du dessus, cette zone de réception étant située entre deux rotors de façon à assurer la mise en suspension de la matière à son arrivée dans le bac et son entraînement vers l'autre extrémité du bac,
   - au moins dans les étages supérieurs, des moyens de chauffage (11) sont disposés en nappes entre les bacs, chaque nappe s'étendant entre deux bacs sous le fond du bac du dessus et à l'aplomb du bac de dessous de façon à chauffer la matière contenue dans le bac du dessus par conduction et celle contenue dans le bac du dessous par rayonnement.

2. Installation selon la revendication 1, caractérisée en ce que le fond de chaque bac est équipé, entre chaque paire de rotors voisins, d'une pièce intercalaire (25) occupant la zone d'accumulation non balayée par les palettes, chaque pièce intercalaire étant agencée de sorte que les palettes des deux rotors concernés passent à proximité de ladite pièce au cours de la rotation.

3. Installation selon l'une des revendications 1 ou 2, caractérisée en ce que les moyens d'entraînement des rotors sont adaptés pour permettre de les entraîner à une vitesse comprise entre 60 et 150 tours/minute et en ce que les rotors et leurs palettes sont agencés pour assurer une vitesse linéaire de cheminement de la matière comprise entre 1 et 2 m/minute.

4. Installation selon l'une des revendications 1, 2 ou 3, caractérisée en ce que chaque rotor comprend un arbre tournant (5a), plusieurs supports (5b) de palettes répartis sur la longueur de cet arbre, et des palettes (5c) s'étendant parallèlement à l'arbre et assujetties autour des supports de façon à être régulièrement réparties autour de l'arbre.

5. Installation selon les revendications 2 et 4 prises ensemble, caractérisée en ce que :
   . chaque palette (5c) est constituée par une lame sensiblement plane inclinée par rapport à la direction radiale d'un angle -i- compris entre 20° et 40°, le rotor étant entraîné dans le sens d'inclinaison desdites palettes,
   . chaque pièce intercalaire (25) présente la forme d'un V renversé dont les deux pans inclinés forment avec le fond du bac un angle -j- compris entre 30° et 50° et dont la hauteur au-dessus du fond est comprise entre 0,35 H et 0,5 H, où H est la distance séparant l'axe du rotor et le fond.

6. Installation selon l'une des revendications 4 ou 5, caractérisée en ce que chaque rotor (5) comprend trois palettes à 120°.

7. Installation selon l'une des revendications 1 à 6, caractérisée en ce qu'elle comprend entre 8 et 15 bacs en tôle métallique, les nappes de chauffage (11) étant disposées entre les bacs situés dans la partie haute de l'enceinte de façon qu'une proportion de 60 à 80 % des bacs soit chauffée.

8. Installation selon l'une des revendications 1 à 7, caractérisée en ce que les moyens de chauffage comprennent un dispositif (15a, 15b) de chauffage d'un fluide caloporteur, des nappes de tubes (11) fixées par des traverses (33) au-dessous des fonds de bac, un collecteur d'entrée (13) relié au dispositif de chauffage et à la nappe inférieure pour alimenter en parallèle en fluide caloporteur les tubes de ladite nappe inférieure, des moyens (12) de distribution du fluide caloporteur d'une nappe vers la nappe de dessus, un collecteur de sortie (14) relié aux tubes de la nappe supérieure, et, en partie haute, un dispositif (22) de reprise du fluide caloporteur.

9. Installation selon l'une des revendications 1 à 7, caractérisée en ce que les moyens de chauffage comprennent des nappes de résistances électriques fixées au-dessous des fonds de bac et des moyens d'alimentation électrique desdites nappes de résistances.

10. Installation selon l'une des revendications 8 ou 9, caractérisée en ce que les moyens de chauffage sont adaptés pour permettre d'assurer au sein de la matière contenue dans les bacs supérieurs une température comprise entre 300° C et 500° C.

11. Installation selon l'une des revendications 1 à 10, caractérisée en ce que les moyens de distribution de matière première comprennent une trémie (6) formant deux sas (7a, 7b) entre trois distributeurs rotatifs (8a, 8b, 8c) dimensionnés pour approvisionner le bac supérieur sur toute sa largeur.

12. Installation selon l'une des revendications 1 à 11, caractérisée en ce qu'elle comprend, en partie haute, un conduit d'exhaure (18) traversant l'enceinte et un volet réglable (19) agencé sur ce conduit, en vue de la récupération des gaz de l'enceinte, avec réglage de la pression en partie haute de ladite enceinte.

13. Installation selon l'une des revendications 1 à 12, dans laquelle l'enceinte (1) présente la forme d'une cloche parallélépipèdique constituée de parois en tôle, garnies intérieurement d'éléments réfractaires isolants (2) et supportées par une ossature (3).

Fig 1

Fig 2

Fig 3

Fig 4

EP 0 462 678 A1

Fig 6

Fig 5

Fig 7

EP 0 462 678 A1

Fig 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 806 573  (L. JANSSENS)<br>* figure 1 *<br>– – – | 1 | C 04 B 11/028<br>F 27 B 9/14<br>B 65 G 35/00 |
| A | GB-A-1 209 56  (PIERPONT & BRYANT LTD)<br>* figures 1,2 *<br>– – – | 1 | |
| A | FR-A-1 030 944  (P. BOUTELANT)<br>* page 3, colonne de gauche, ligne 14 - ligne 15; figures 1,5 *<br>– – – | 1 | |
| A | FR-A-1 375 629  (A. B. BLANCH)<br>* figure 1 *<br>– – – | 1 | |
| A | FR-A-1 304 549  (M. GUILLET)<br>* figure *<br>– – – – – | | |

| DOMAINES TECHNIQUES RECHERCHES (Int. Cl.5) |
|---|
| C 04 B<br>F 27 B<br>B 65 G |

Le présent rapport de recherche a été établi pour toutes les revendications

| Lieu de la recherche | Date d'achèvement de la recherche | Examinateur |
|---|---|---|
| La Haye | 18 septembre 91 | DAELEMAN P.C.A. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
————————————————————————
& : membre de la même famille, document correspondant